# EUROPÄISCHE PATENTSCHRIFT

(11) **EP 2 289 751 B1**
(45) Veröffentlichungstag und Bekanntmachung des Hinweises auf die Patenterteilung: **23.05.2018**
(21) Anmeldenummer: 10008604.0
(22) Anmeldetag: 18.08.2010
(51) Int. Cl.: B60W 20/00, B60K 6/36, B60K 6/387, B60K 6/40, B60K 6/442, B60K 6/547, B60W 10/02, B60W 10/06, B60W 10/08, B60W 10/10

(54) **Hybridantriebsstrang für ein Kraftfahrzeug und Verfahren zu dessen Betrieb**
Hybrid powertrain for a motor vehicle and method for operating same
Chaîne de transmission hybride pour un véhicule automobile et son procédé de fonctionnement

(30) Priorität: 29.08.2009 DE 102009039360
(43) Veröffentlichungstag der Anmeldung: 02.03.2011
(73) Patentinhaber: Volkswagen Aktiengesellschaft, 38440 Wolfsburg (DE)
(72) Erfinder: Schröder, Hendrik, Dr., 38126 Braunschweig (DE); Hanke, Stefan, 38126 Braunschweig (DE); Hofmann, Lars, Dr., 38448 Wolfsburg (DE)

(56) Entgegenhaltungen:
- EP-A1- 1 714 817
- EP-A1- 1 714 818
- DE-A1-102008 031 456
- US-A1- 2007 022 835

## Beschreibung

### Gebiet der Erfindung

Die Erfindung bezieht sich auf einen Hybridantriebsstrang für ein Kraftfahrzeug, umfassend
- eine Verbrennungskraftmaschine
- eine erste, vorwiegend generatorisch arbeitende elektrische Maschine, deren Rotor mit einer Ausgangswelle der Verbrennungskraftmaschine verbunden ist und deren elektrischer Ausgang mit einem elektrischen Energiespeicher verbunden ist,
- eine zweite, vorwiegend motorisch arbeitende elektrische Maschine, deren elektrischer Eingang mit dem elektrischen Energiespeicher verbunden ist,
wobei wenigstens ein Koppelelement vorgesehen ist, mittels dessen die erste elektrische Maschine und/oder die zweite elektrische Maschine über eine Übersetzungsstufe mit einem Abtrieb des Kraftfahrzeugs koppelbar ist.

Die Erfindung bezieht sich weiter auf ein Verfahren zum Betrieb eines derartigen Antriebsstranges.

### Stand der Technik

Hybride Antriebsstränge für Kraftfahrzeuge, die nach dem Prinzip des seriellen Hybrids arbeiten, sind seit langem bekannt. Ein solcher Antriebsstrang ist beispielsweise in dem als twinDRIVE2 bekannten Konzept der Anmelderin realisiert. Ein solcher Antriebsstrang umfasst eine Verbrennungskraftmaschine, deren Ausgangswelle, typischerweise die Kurbelwelle, mit dem Rotor einer als Generator bezeichneten, ersten elektrischen Maschine verbunden ist. Die erste elektrische Maschine kann sowohl im generatorischen als auch im motorischen Modus befrieben werden. Da sie jedoch in der typischen Anwendung vorwiegend generatorisch und nur in besonderen Situationen motorisch betrieben wird, soll sie nachfolgend vereinfacht als Generator bezeichnet werden. Der elektrische Ausgang des Generators ist mit einem elektrischen Speicher, insbesondere einem Akkumulator, in den im Generator erzeugte elektrische Energie einspeisbar ist, verbunden. Der mechanische Ausgang des Generators, d.h. sein Rotor, ist über eine Trennkupplung mit einer zweiten elektrischen Maschine verbunden. Die zweite elektrische Maschine arbeitet bei der typischen Anwendung vorwiegend im motorischen Betrieb und nur in besonderen Situationen im generatorischen Betrieb und soll daher nachfolgend vereinfachend als Elektromotor angesprochen werden. Der elektrische Eingang des Elektromotors ist mit dem elektrischen Speicher verbunden, sodass er aus diesem elektrische Energie beziehen kann. Der mechanische Ausgang des Elektromotors, d.h. sein Rotor, ist über eine Übersetzungsstufe mit dem Abtrieb des Kraftfahrzeuges, welcher ein oder mehrere nachfolgende Getriebe, insbesondere Differentiale sowie ein oder mehrere angetriebene Achsen umfassen kann, verbunden.

Der bekannte Antriebsstrang kann in vier Grundmodi betrieben werden. Beim elektrischen Fahren ist die Verbrennungskraftmaschine außer Betrieb gesetzt und die Trennkupplung zwischen Generator und Elektromotor geöffnet, sodass allein der Elektromotor über die Übersetzungsstufe mit dem Abtrieb verbunden Ist und diesen unter Energiebezug aus dem elektrischen Speicher antreibt. Beim seriellen Fahren ist ebenfalls allein der Elektromotor mit dem Abtrieb verbunden; die Verbrennungskraftmaschine ist jedoch in Betrieb und treibt den Generator an, dessen erzeugte elektrische Energie an den Elektromotor zu dessen Betrieb geleitet wird. Beim gekoppelten Betrieb ist die Verbrennungskraftmaschine ebenfalls in Betrieb; die Trennkupplung ist jedoch geschlossen, sodass die Kurbelwelle des Verbrennungsmotors mit dem Abtrieb gekoppelt ist. In beiden letztgenannten Modi sind jeweils zwei Fälle zu unterscheiden, nämlich das gekoppelte Fahren mit Laden und das gekoppelte Fähren mit Boosten. Beim Fahren mit Laden erzeugt die Verbrennungskraftmaschine überschüssige mechanische Arbeit, welche vom Generator in elektrische Energie umgesetzt und zum Laden des elektrischen Speichers genutzt wird. Beim Fahren mit Boosten bezieht der Elektromotor seine hierfür benötigte Energie aus dem elektrischen Speicher. Schließlich kann der bekannte Antriebsstrang noch im Rekuperationsmodus betrieben werden, bei dem mechanische Energie des Abtriebs vom Generator und/oder dem Elektromotor in elektrische Energie zum Laden des elektrischen Speichers umgesetzt wird.

Bei der typischen Betriebsweise wird bei niedrigeren Geschwindigkeiten tendenziell elektrisch, sei es rein elektrisch oder seriell, und bei höheren Geschwindigkeiten im gekoppelten Betrieb gefahren.

Nachteilig bei diesem Konzept ist, dass die positiven Eigenschaften des verbrennungsmotorischen Antriebsteils, nämlich hohe Dauerzugkräfte und große Höchstgeschwindigkeiten bzw. hohe Maximaldrehzahlen, nicht voll ausgenutzt werden. Insbesondere kann es sein, dass in extremen Situationen von hohen Radmomentforderungen und geringen Geschwindigkeiten, wie etwa beim Anfahren am Berg oder bei dauerhafter Fahrt an einem steilen Berg, der Elektromotor überfordert ist. Weiter kann es bei sehr hohen Geschwindigkeiten sein, dass die grundsätzlich mit der Verbrennungskraftmaschine leistbaren hohen Drehzahlen aufgrund der Drehzahlbegrenzung des Elektromotors nicht realisiert werden können, sodass die für die Verbrennungsmaschine grundsätzlich mögliche Höchstgeschwindigkeit nicht erreichbar ist.

Aus der US 2007/022835 A1 ist des Weiteren ein Doppelkupplungsgetriebe mit integrierten elektrischen Maschinen gemäß dem Oberbegriff des Anspruchs 1 bekannt, wobei das Doppelkupplungsgetriebe eine Doppelkupplung, eine erste als Hohlwelle ausgebildete Eingangswelle und eine in der ersten Eingangswelle koaxial gelagerte zweite Eingangswelle sowie eine als Hohlwelle ausgebildete Vorgelegewelle und eine dort koaxial gelagerte zweite Vorgelegewelle aufweist. Zwischen einer Verbrennungskraftmaschine und der Doppelkupplung respektive an der Eingangsseite der Doppelkupplung ist eine erste elektrische Maschine angeordnet. Ferner ist zumindest eine weitere elektrische Maschine so ausgebildet und angeordnet, dass diese in der Lage ist, ein Drehmoment direkt zumindest auf die Eingangsseite der Doppelkupplung und/oder in eine der beiden Eingangswellen und/oder in zumindest eine Getriebevorgelegewelle und/oder in die Abtriebswelle des Doppelkupplungsgetriebes einzuleiten oder von diesem aufzunehmen. Unter dem Begriff der direkten Einleitung oder Aufnahme eines Drehmomentes durch die elektrische Maschine wird hierbei verstanden, dass diese mit ihrem beweglichen Teil drehfest mit der Getriebewelle verbunden ist, so dass die Rotationsachsen der Welle der elektrischen Maschine mit der Getriebewelle auf einer Linie liegen oder alternativ dazu die elektrische Maschine über zwischengeschaltete Übertragungsglieder, nämlich mittels eines eigenen Getriebes, eines Riemens, einer Kette oder eines Zahnradpaares auf eine Getriebewelle direkt einwirken.

### Aufgabenstellung

Es ist die Aufgabe der vorliegenden Erfindung, einen gattungsgemäßen Antriebsstrang derart weiterzubilden, dass die positiven Eigenschaften der Verbrennungskraftmaschine, nämlich insbesondere deren hohe Dauerzugkräfte und hohe Maximaldrehzahl besser nutzbar sind. Es ist eine weitere Aufgabe der Erfindung ein entsprechendes Betriebsverfahren für einen derart verbesserten Antriebsstrang zur Verfügung zu stellen.

### Darlegung der Erfindung

Ausgehend von einem Hybridantriebsstrang für ein Kraftfahrzeug, umfassend
- eine Verbrennungskraftmaschine,
- eine erste, vorwiegend generatorisch arbeitende elektrische Maschine, deren Rotor mit einer Ausgangswelle der Verbrennungskraftmaschine verbunden ist und deren elektrischer Ausgang mit einem elektrischen Energiespeicher verbunden ist,
- eine zweite, vorwiegend motorisch arbeitende elektrische Maschine, deren elektrischer Eingang mit dem elektrischen Energiespeicher verbunden ist,
wobei wenigstens ein Koppelelement vorgesehen ist, mittels dessen die erste elektrische Maschine und/oder die zweite elektrische Maschine über eine Übersetzungsstufe mit einem Abtrieb des Kraftfahrzeugs koppelbar ist, und wobei die erste elektrische Maschine wahlweise über ein erstes Koppelelement und eine erste Übersetzungsstufe oder über ein zweites Koppelelement und eine zweite Übersetzungsstufe mit dem Abtrieb koppelbar ist,
wird die oben erstgenannte Aufgabe dadurch gelöst, dass die zweite elektrische Maschine über ein eigenes Koppelelement und eine dritte Übersetzungsstufe wahlweise und unabhängig von der ersten elektrischen Maschine mit dem Abtrieb koppelbar ist.

Besonders vorteilhafte Ausführungsformen der Erfindung sind Gegenstand der abhängigen Ansprüche 2-6.

Kern der Erfindung ist es, die mechanische Reihenanordnung von Verbrennungskraftmaschine und elektrischen Maschinen, die den Stand der Technik charakterisiert, zu überwinden und sowohl die Verbrennungskraftmaschine als auch den Elektromotor über jeweils für das entsprechende Antriebsaggregat optimierte Übersetzungsstufen mit dem Abtrieb des Kraftfahrzeugs zu koppeln. Der Generator, der insbesondere aufgrund seiner kleinen Abmessungen im Gegensatz zum Elektromotor keiner relevanten Drehzahlbegrenzung unterliegt und dessen motorische Zusatzleistungen nur in besonderen Fahrsituationen in geringem Maße relevant ist, kann weiter direkt mit der Kurbelwelle der Verbrennungskraftmaschine gekoppelt bleiben. Die wahlweise Kopplung seines Rotors über die erste bzw. zweite Übersetzungsstufe mit dem Abtrieb des Kraftfahrzeugs entspricht daher im Wesentlichen einer entsprechenden wahlweisen Kopplung der Verbrennungskraftmaschine mit dem Abtrieb. Die wahlweise Kopplung wird über zwei Koppelelemente realisiert, von denen jeweils eine je einer der Übersetzungsstufen vor- oder nachgeschaltet ist. Die Koppelelemente sind selbstverständlich so zu steuern, dass jeweils nur ein oder kein Kraftflusspfad von der Verbrennungskraftmaschine zum Abtrieb realisiert ist. Dies kann mit einer entsprechenden Programmierung eines Steuergerätes oder auch auf mechanische Weise erfolgen, wobei letzteres insbesondere realisierbar ist, wenn die beiden Koppelelemente Teile einer komplexeren Doppelkupplung sind. Der Elektromotor ist über ein eigenes Koppelelement, das der dritten Übersetzungsstufe vor- oder nachgeschaltet ist, mit dem Abtrieb koppelbar. Die Ankopplung des Elektromotors an den Abtrieb kann zusätzlich zur Kopplung der Verbrennungskraftmaschine oder alternativ dazu erfolgen. Im rein elektrischen Fahrbetrieb ist die Verbrennungskraftmaschine ausgeschaltet und die beiden Kraftflusspfade zwischen Verbrennungskraftmaschine und Abtrieb geöffnet. Lediglich der Elektromotor ist über sein zugeordnetes Koppelelement und die dritte Übersetzungsstufe an den Abtrieb angekoppelt. Gleiches gilt beim seriellen Fahren. Dabei kann der elektrische Generator eine Überschlussleistung erzeugen, sodass während des seriellen Fahrens gleichzeitig der Akkumulator geladen werden kann. Es ist jedoch auch möglich, dass der Elektromotor beim seriellen Fahren mehr Leistung erbringt als ihm von dem Generator zur gleichen Zeit zur Verfügung gestellt wird. Die zusätzlich benötigte Energie kann er dann aus dem Akkumulator beziehen. In diesem Fall spricht man von seriellem Fahren plus Boosten. Im gekoppelten Betrieb ist zusätzlich zum Elektromotor die Verbrennungskraftmaschine über einen ihrer möglichen Kraftflusspfade mit dem Abtrieb gekoppelt. Auch hier ist ein Modus gekoppeltes Fahren plus Laden sowie ein Modus gekoppeltes Fahren plus Boosten denkbar. Schließlich eröffnet die Erfindung noch die weitere Möglichkeit, die elektrische Maschine vom Antrieb, abzukoppeln und im Wesentlichen in einem reinen verbrennungsmotorischen Betrieb zu fahren. Auch hier ist eine Kombination mit einem Lade- bzw. einem Boost-Vorgang denkbar, wobei die beim Boosten genutzte elektrische Leistung von dem dann motorisch betriebenen Generator in mechanische Energie umgesetzt wird.

Bei einer bevorzugten Ausführungsform ist zur Realisierung der Koppelbarkeit der elektrischen Maschinen mit dem Abtrieb wenigstens ein Koppelelement als eine schaltbare, formschlüssige Kupplung ausgebildet. Eine solche formschlüssige Kupplung kann nach dem bekannten Prinzip einer Synchronisierung gestaltet sein. Der Vorteil der formschlüssigen Kupplung gegenüber einer Reibkupplung Ist der geringere Bauraumbedarf sowie der geringere Verschleiß.

Wie erwähnt, erlaubt es die Erfindung, jedes der Antriebsaggregate über eine auf seine speziellen Eigenschaften hin optimierte Übersetzung mit dem Abtrieb zu koppeln. So ist bei. einer bevorzugten Ausführungsform der Erfindung vorgesehen, dass die erste Übersetzungsstufe einen Berggang darstellt, dessen Übersetzung i1 zwischen i1=10 und i1=12 liegt. Dies bedeutet, dass die Verbrennungskraftmaschine in einem für sie günstigen, hohen Drehzahlbereich arbeiten kann, am Abtrieb aber eine geringe Drehzahl mit hohem Moment anliegt. Ein solcher Betrieb eignet sich beispielsweise für lange, steile Bergauffahrten, wo dauerhaft hohe Durchzugskräfte erforderlich sind, die den Elektromotor, der nach dem Stand der Technik bei niedrigen Geschwindigkeiten als vorwiegendes Antriebsaggregat eingesetzt wird, überfordern würde.

Bei einer bevorzugten Weiterbildung der Erfindung ist vorgesehen, dass die zweite Übersetzungsstufe einen Overdrive darstellt, dessen Übersetzung i2 zwischen i2=2,8 und i2=3,5 liegt. Dieser Modus ist für besonders hohe Geschwindigkeiten vorgesehen, in denen die Verbrennungskraftmaschine auch nach dem Stand der Technik als hauptsächliches Antriebsaggregat dient. Aufgrund der Erfindung ist es jedoch möglich, den Elektromotor in diesem Modus vollständig abzukoppeln, sodass seine bauartbedingte Drehzahlbeschränkung nicht ins Gewicht fällt und die positiven Eigenschaften der Verbrennungskraftmaschine im hohen Drehzahlbereich Kraftstoff sparend ausgenutzt werden können. Vorteilhafter Weise liegt die Übersetzung der dritten Übersetzungsstufe i3 zwischen i3=3,3 und i3=5,3. Insbesondere kann vorgesehen sein, dass die Übersetzung der dritten Übersetzungsstufe i3 zwischen dem 1,2fachen und dem 1,5fachen der Übersetzung der zweiten Übersetzungsstufe liegt.

Eine solche Auslegung der Übersetzungen führt dazu, dass im seriellen sowie im rein elektrischen Fahrbetrieb die Eigenschaften des Elektromotors, nämlich eine hohe elektrische Leistung und hohes Radmoment bei vergleichsweise niedrigen Drehzahlen, optimal genutzt werden können. Beim Übergang zu höheren Drehzahlen kann die Verbrennungskraftmaschine in einem günstigen Betriebspunkt genutzt werden, ohne - bei sehr hohen Geschwindigkeiten - von dem Elektromotor behindert zu werden. Andererseits kann in Fällen, in denen auch bei niedrigen Geschwindigkeiten ein elektrisches Fahren aufgrund geforderter, hoher Dauerzugkräfte ungünstig Ist, ebenfalls auf die Verbrennungskraftmaschine zurückgegriffen werden, wobei diese über den speziellen Berggang an den Abtrieb gekoppelt ist.

Die oben zweitgenannte Aufgabe wird in Verbindung mit den Merkmalen des Oberbegriffs von Anspruch 7 dadurch gelöst, dass ausgehend von einem seriellen, elektrischen Fahrbetrieb, in dem nur die zweite elektrische Maschine - über die dritte Übersetzungsstufe - mit dem Abtrieb gekoppelt ist, automatisch unter Steuerung durch eine Steuervorrichtung zu einem verbrennungsmotorischen Bergfahrbetrieb, in dem die Ausgangswelle der Verbrennungskraftmaschine über die erste Übersetzungsstufe mit dem Abtrieb gekoppelt ist, umgeschaltet wird, wenn ein aktuell bestimmter Vergleichswert, der einen Quotienten aus einer vom Fahrer aktuell vorgegebenen Radmomentanforderung und einer am Abtrieb aktuell anliegenden Drehbeschleunigung repräsentiert, kleiner ist als ein vorgegebener erster Grenzwert.

Dieses Verfahren zum Betreiben eines erfindungsgemäßen Antriebsstrangs definiert die Voraussetzungen für eine Umschaltung von einem elektrischen Fahrbetrieb zu dem verbrennungsmotorischen Bergfahrbetrieb. Die Definition des ersten Grenzwertes ist vom Fachmann insbesondere in Ansehung der im konkreten Fall realisierten Übersetzungen vorzunehmen.

Besonders vorteilhafte Ausführungsformen der Erfindung sind Gegenstand der abhängigen Ansprüche 8 und 9, Insbesondere ist bei einer Weiterbildung der Erfindung ist vorgesehen, dass von dem verbrennungsmotorischen Bergfahrbetrieb in den seriellen, elektrischen Fahrbetrieb umgeschaltet wird, wenn der Vergleichswert größer ist als ein vorgegebener zweiter Grenzwert, wobei günstigerwelse der zweite Grenzwert größer Ist als der erste Grenzwert, d.h. eine Hysterese realisiert ist.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Fig. 1: einen seriellen Hybridantriebsstrang gemäß dem Stand der Technik,
- Fig. 2: eine schematische Darstellung eines erfindungsgemäßen Antriebsstrang,
- Fig. 3: ein Blockschema eines erfindungsgemäßen Antriebsstrangs,
- Fig. 4: ein Blockschema eines erfindungsgemäßen Antriebsstrangs gemäß einer alternativen Ausführungsform,
- Fig. 5: ein Blockschema eines erfindungsgemäßen Antriebsstrangs gemäß einer alternativen Ausführungsform,
- Fig. 6: ein Blockschema eines erfindungsgemäßen Antriebsstrangs gemäß einer alternativen Ausführungsform,
- Fig. 7: ein Blockschema eines erfindungsgemäßen Antriebsstrangs gemäß einer alternativen Ausführungsform,
- Fig. 8: ein Blockschema eines erfindungsgemäßen Antriebsstrangs gemäß einer alternativen Ausführungsform,
- Fig. 9: ein Blockschema eines erfindungsgemäßen Antriebsstrangs gemäß einer alternativen Ausführungsform,
- Fig. 10: ein Blockschema eines erfindungsgemäßen Antriebsstrangs gemäß einer alternativen Ausführungsform,
- Fig. 11: ein Blockschema eines erfindungsgemäßen Antriebsstrangs gemäß einer alternativen Ausführungsform,
- Fig. 12: ein Blockschema eines erfindungsgemäßen Antriebsstrangs gemäß einer alternativen Ausführungsform,
- Fig. 13: ein Blockschema eines erfindungsgemäßen Antriebsstrangs gemäß einer alternativen Ausführungsform,
- Fig. 14: ein Blockschema eines erfindungsgemäßen Antriebsstrangs gemäß einer alternativen Ausführungsform,
- Fig. 15: ein Blockschema eines erfindungsgemäßen Antriebsstrangs gemäß einer alternativen Ausführungsform,
- Fig. 16: ein Blockschema eines erfindungsgemäßen Antriebsstrangs gemäß einer alternativen Ausführungsform,
- Fig. 17: ein Blockschema eines erfindungsgemäßen Antriebsstrangs gemäß einer alternativen Ausführungsform,
- Fig. 18: ein Blockschema eines erfindungsgemäßen Antriebsstrangs gemäß einer alternativen Ausführungsform,
- Fig. 19: ein Blockschema eines erfindungsgemäßen Antriebsstrangs gemäß einer alternativen Ausführungsform,
- Fig. 20: ein Konstruktionsschema eines erfindungsgemäßen Antriebsstrangs,
- Fig. 21: ein Konstruktionsschema eines erfindungsgemäßen Antriebsstrangs gemäß einer alternativen Ausführungsform,
- Fig. 22: ein Konstruktionsschema eines erfindungsgemäßen Antriebsstrangs gemäß einer alternativen Ausführungsform,
- Fig. 23: ein Konstruktionsschema eines erfindungsgemäßen Antriebsstrangs gemäß einer alternativen Ausführungsform,
- Fig. 24: ein Konstruktionsschema eines erfindungsgemäßen Antriebsstrangs gemäß einer alternativen Ausführungsform,
- Fig. 25: ein Konstruktionsschema eines erfindungsgemäßen Antriebsstrangs gemäß einer alternativen Ausführungsform,
- Fig. 26: ein Konstruktionsschema eines erfindungsgemäßen Antriebsstrangs gemäß einer alternativen Ausführungsform,
- Fig. 27: ein Konstruktionsschema eines erfindungsgemäßen Antriebsstrangs gemäß einer alternativen Ausführungsform,
- Fig. 28: ein Konstruktionsschema eines erfindungsgemäßen Antriebsstrangs gemäß einer alternativen Ausführungsform,
- Fig. 29: ein Konstruktionsschema eines erfindungsgemäßen Antriebsstrangs gemäß einer alternativen Ausführungsform,
- Fig. 30: eine schematische Darstellung der Betriebsbereiche eines erfindungsgemäßen Antriebsstrangs,
- Fig. 31: Schema von Figur 30 mit Markierung von Betriebsbereichen mit Abkopplung des Elektromotors.

### Ausführliche Darstellung bevorzugter Ausführungsformen

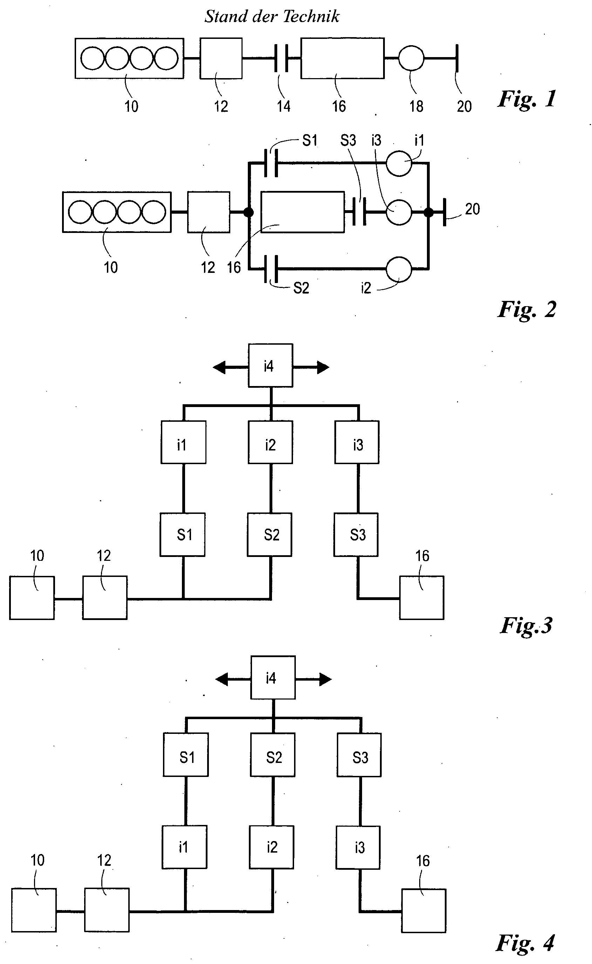

Figur 1 zeigt eine schematische Darstellung eines seriellen Hybridantriebsstrangs nach dem Stand der Technik, insbesondere nach dem als twinDrive2 bekannten Konzept der Anmelderin. Eine Verbrennungskraftmaschine 10 treibt, z.B. über ihre Kurbelwelle, den Rotor einer ersten elektrischen Maschine 12 an. Die erste elektrische Maschine arbeitet vorwiegend generatorisch, kann jedoch auch im motorischen Betrieb genutzt werden. Gleichwohl soll nachfolgend von dem Generator 12 gesprochen werden. Über eine Trennkupplung 14 ist der Generator 12 mit einer zweiten elektrischen Maschine 16 verbindbar. Die zweite elektrische Maschine 16 wird vorwiegend im motorischen Modus betrieben, kann jedoch auch generatorisch wirken. Gleichwohl soll sie nachfolgend als Elektromotor 16 angesprochen werden. Der Elektromotor 16 ist über eine Übersetzungsstufe 18 mit dem Abtrieb 20 des Kraftfahrzeugs verbunden. Sowohl der Generator 12 als auch der Elektromotor 16 sind mit einem nicht dargestellten elektrischen Energiespeicher verbunden und können auch untereinander direkte elektrische Verbindungen aufweisen. Die Funktionsweisen eines derartigen Antriebstrangs im rein elektrischen Modus, Im gekoppelten Modus und im Rekuperationsmodus bei den beiden erstgenannten Modi jeweils gegebenenfalls mit Laden oder Boosten wurde bereits weiter oben beschrieben.

Figur 2 zeigt ein Schema der Grundstruktur eines erfindungsgemäßen Antriebsstrangs. Nach wie vor ist die Verbrennungskraftmaschine 10 mit dem Rotor des Generators 12 drehfest verbunden. Hinter dem Generator 12 eröffnen sich jedoch zwei separate mechanische Kraftflusspfade zum Abtrieb 20. Ein erster Kraftflusspfad läuft über eine erste Kupplung S1 und eine erste Übersetzungsstufe i1. Ein zweiter Kraftflusspfad läuft über eine zweite Kupplung S2 und eine zweite Übersetzungsstufe i2. Unabhängig hiervor ist der Elektromotor 16 an den Abtrieb an- bzw. von diesem abkoppelbar. Der Kraftfluss von dem Elektromotor 16 zum Abtrieb 20 läuft über die dritte Kupplung S3 und die dritte Übersetzungsstufe i3. Aus dieser Struktur wird deutlich, dass die dem Elektromotor 16 zugeordnete Übersetzungsstufe i3 speziell für die Eigenschaften des Elektromotors 16 optimiert sein kann, ohne Rücksicht auf Randbedingungen nehmen zu müssen, die von der Verbrennungskraftmaschine 10 aufgestellt werden, wie dies beim Stand der Technik der Fall ist, wo das Moment der Verbrennungskraftmaschine 10 wie auch das Moment des Elektromotors 16 über dieselbe Übersetzungsstufe 18 laufen. Die beiden der Verbrennungskraftmaschine 10 zugeordneten Übersetzungsstufen i1 und i2 können dann jeweils für die Eigenschaften der Verbrennungskraftmaschine optimiert sein, wobei unterschiedliche Betriebsarten realisiert sein können. Beispielsweise kann die Übersetzungsstufe i1 eine Übersetzung von etwa 2,8 und damit einen sogenannten Overdrive zum Kraftstoff sparenden Fahren bei sehr hohen Geschwindigkeiten realisieren und die Übersetzungsstufe i2 kann eine Übersetzung von etwa 12, d.h. einen Berggang realisieren, bei dem die hohen Dauersteigkräfte der Verbrennungskraftmaschine 10 nutzbar gemacht werden. Übertragen auf ein herkömmliches Schaltgetriebe bei nicht-hybriden Kraftfahrzeugen entspricht bei dieser Auslegung i1 etwa einem 1,5. Gang, i2 einem 6. Gang und i3 einem 5. Gang.

Die separate Abkoppelbarkeit des Elektromotors 16 reduziert Schleppverluste und verhindert eine Behinderung des im Wesentlichen verbrennungsmotorisch betriebenen Fahrens bei sehr hohen Geschwindigkeiten, die durch die Drehzahlbegrenzung des Elektromotors 16 erfolgen könnte. Zudem baut das System axial kompakter, sodass eine größere wirksame Leiterlänge des Elektromotors erreicht werden kann.

Auch die bevorzugte Ausführung der Kupplungen S1, S2 und S3 als formschlüssige Kupplungen reduziert Reibungsverluste und führt ebenfalls zu einem axialen Bauraumgewinn.

Figur 3 zeigt die Ausführungsform des erfindungsgemäßen Antriebsstrangs gemäß Figur 2 in einer anderen Darstellung als Blockdiagramm. Der Abtrieb 20 ist hier als Differential i4 dargestellt; die übrigen Bezugszeichen entsprechen denjenigen in Figur 2.

Figur 4 zeigt eine alternative Ausführungsform, bei der die Anordnung der Kupplungen und der zugeordneten Übersetzungsstufen im Vergleich zur Ausführungsform von Figur 3 vertauscht wurden. Selbstverständlich ist es auch möglich, nur einzelne der Kupplungs/Übersetzungsstufen-Paare zu vertauschen.

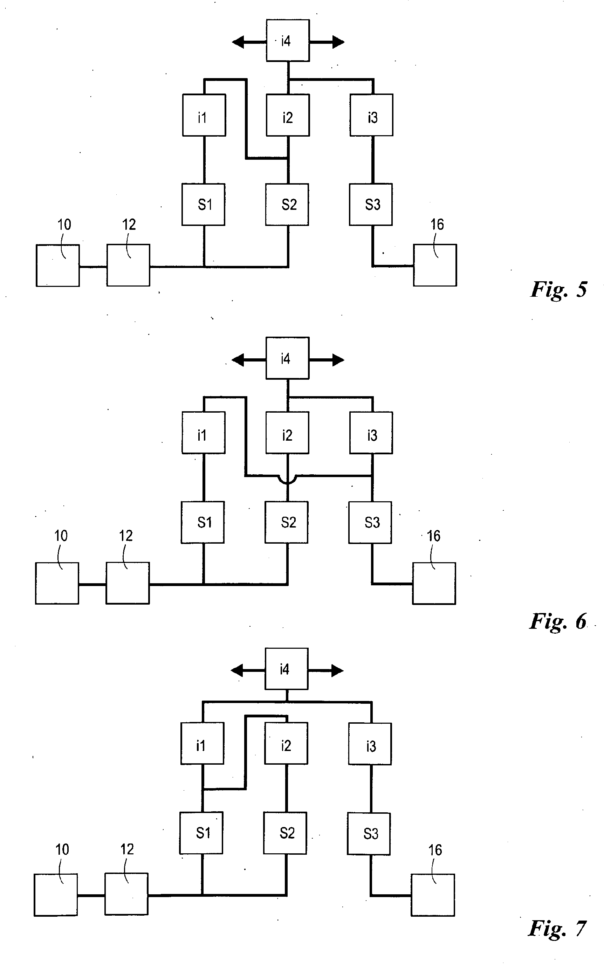

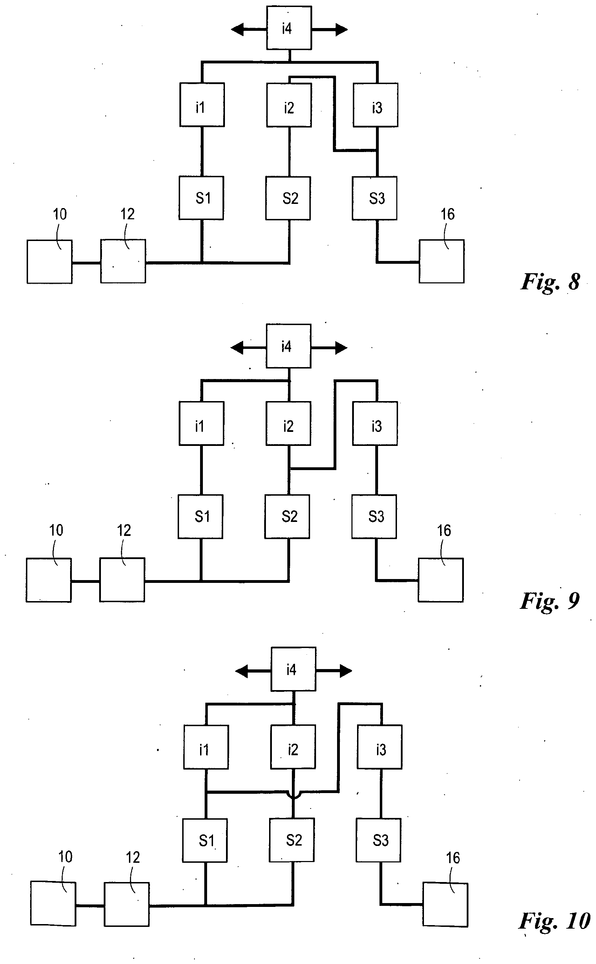

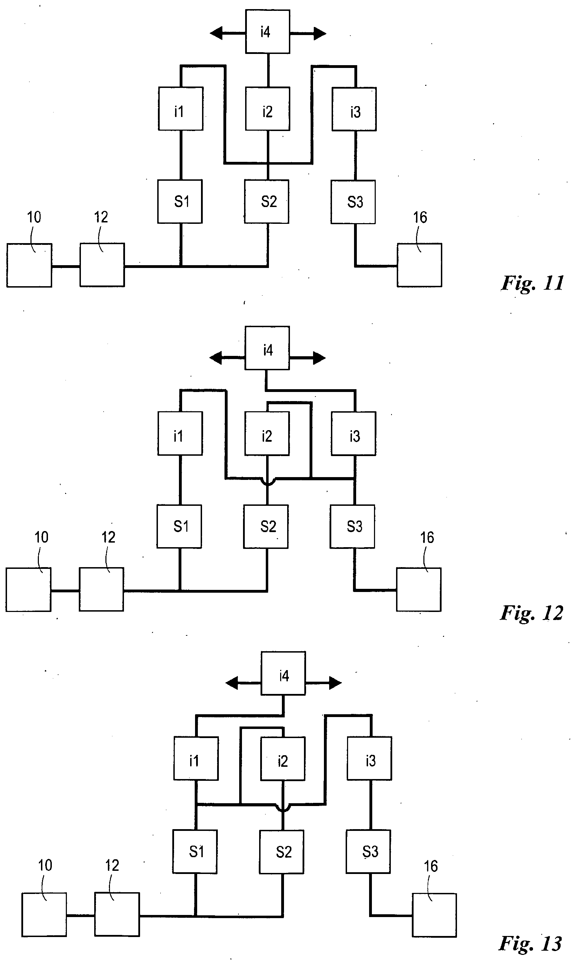

Die Figuren 5 bis 13 zeigen verschiedene Varianten, bei denen die jeweils einem Antriebsaggregat zugeordnete Gesamtübersetzung durch Hintereinanderschaltung mehrerer Übersetzungsstufen zustande kommt. Einzelne Übersetzungsstufen sind dabei Element mehrerer Kraftflusspfade.

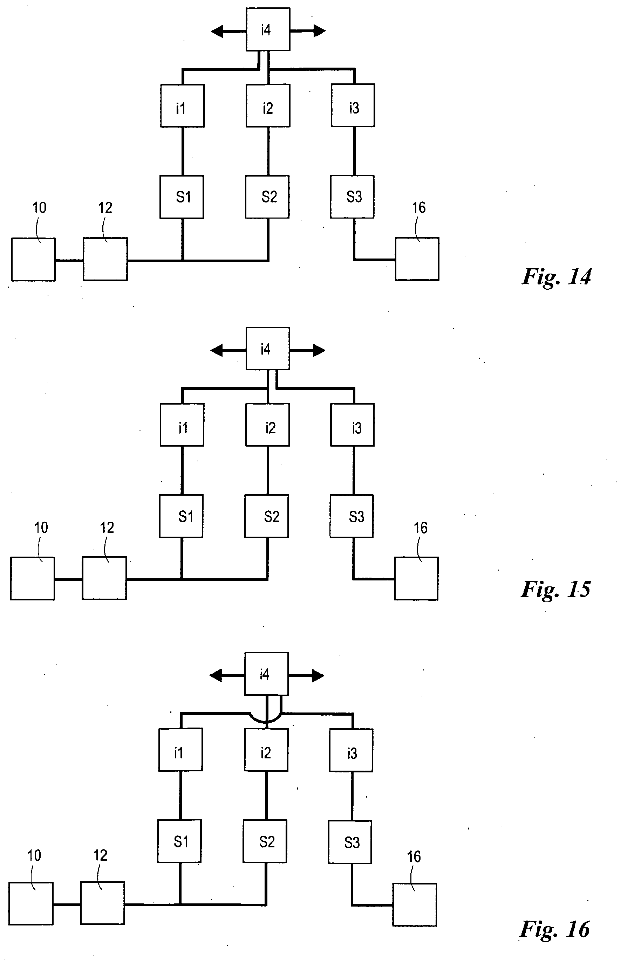

Die Figuren 14 bis 16 zeigen verschiedene Ausführungsformen, bei denen die Kraftflusspfade erst im Differential i4 zusammengeführt werden. Man kann hier auch von Strukturen mit getrennten Triebwellen sprechen.

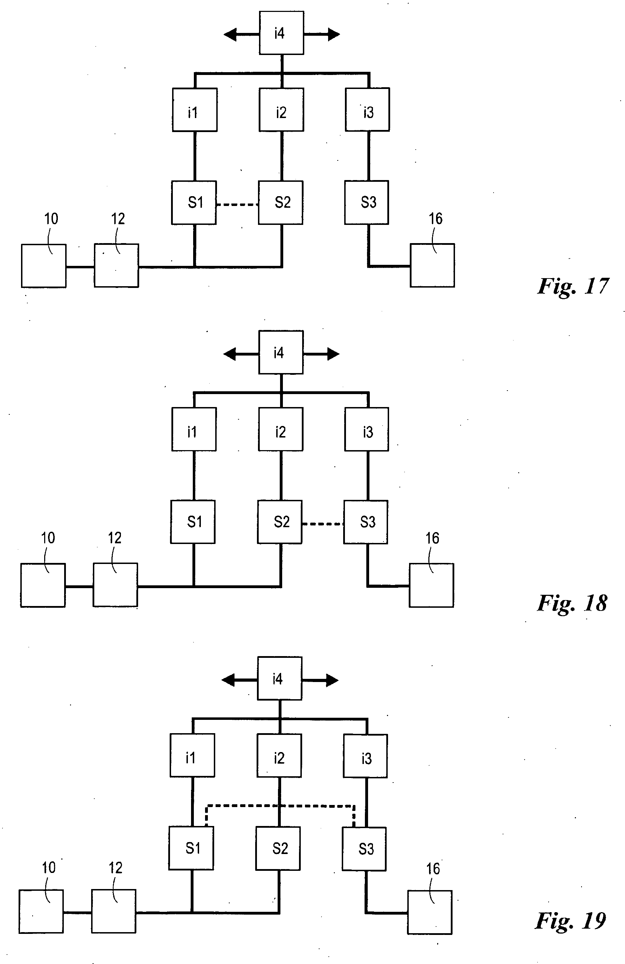

Die Figuren 17 bis 19 zeigen verschiedene Ausführungsformen, bei denen jeweils zwei der Kupplungen S1, S2 und S3 in einem komplexeren Koppelelement zusammengefasst sind. Die gestrichelten Linien zeigen die jeweils zusammengefassten Kupplungen.

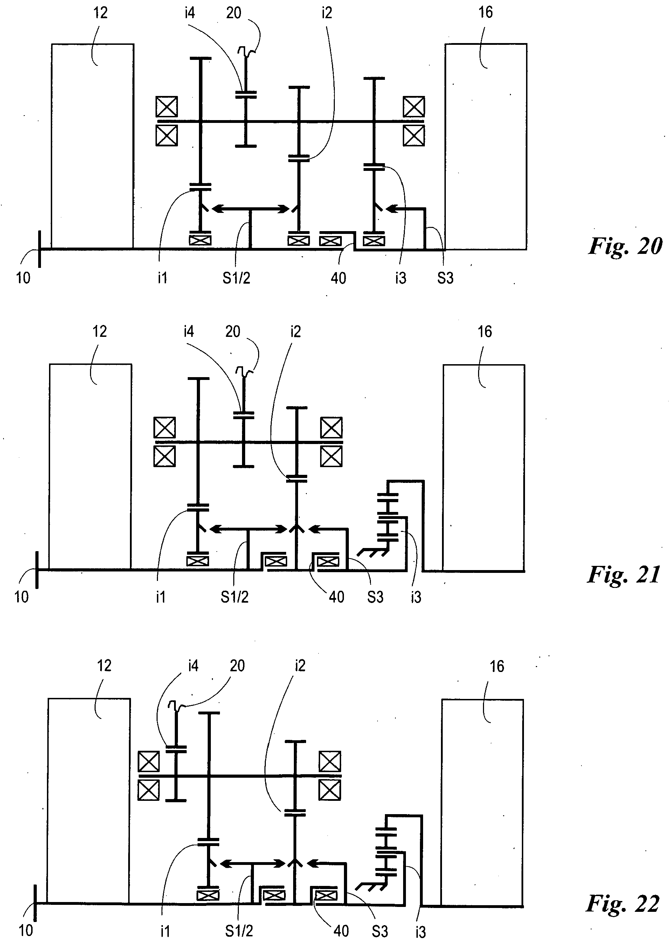

Figur 20 zeigt ein Konstruktionsschema einer Ausführungsform des erfindungsgemäßen Antriebsstrangs, wobei die gleichen Bezugszeichen Verwendung finden wie in den vorherigen Darstellungen. Bei der gezeigten Ausführungsform sind die Losräder auf den Antriebswellen der Antriebsaggregate 10 bzw. 16 angeordnet. Die Festräder sind auf einer einzigen Triebwelle angeordnet. Als Übersetzung i3 ist eine Stirnradstufe gewählt. Die Abkopplung des Elektromotors 16 kann über die Entkopplung 40 erfolgen, wenn die formschlüssige Kupplung S3 offen ist. Die Ankopplung des Abtriebs 20 über die Übersetzungsstufe i4 ist mittig auf der Triebwelle angeordnet.

Figur 21 zeigt im Wesentlichen die gleiche Ausführungsform wie Figur 20, wobei jedoch die Übersetzungsstufe i3 als Planetengetriebe ausgestaltet ist.

Figur 22 zeigt im Wesentlichen die gleiche Ausführungsform wie Figur 21, wobei jedoch die Ankopplung des Abtriebs 20 über die Übersetzungsstufe i4 in der Darstellung links auf der Triebwelle angeordnet ist.

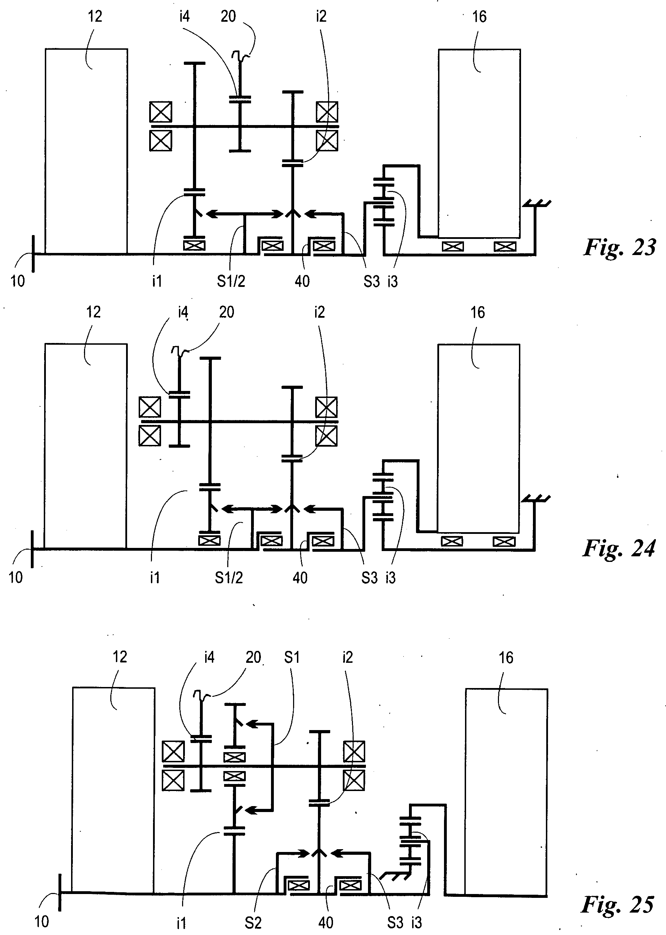

Figur 23 unterscheidet sich von der Ausführungsform von Figur 21 durch eine andere Anbindung des Sonnenrades in dem Planetengetriebe, welches die Übersetzungsstufe i3 darstellt.

Die Ausführungsform von Figur 24 unterscheidet sich von der Ausführungsform der Figur 23 durch eine In der Figur linksseitige Anordnung der Ankopplung des Abtriebs 20 auf der Triebwelle.

Bei der Ausführungsform von Figur 25 sind zwei Losräder auf den Antriebswellen der Antriebsaggregate sowie ein Los- und ein Festrad auf einer gemeinsamen Triebwelle angeordnet. Die Übersetzungsstufe i3 ist auch hier als Planetengetriebe ausgebildet.

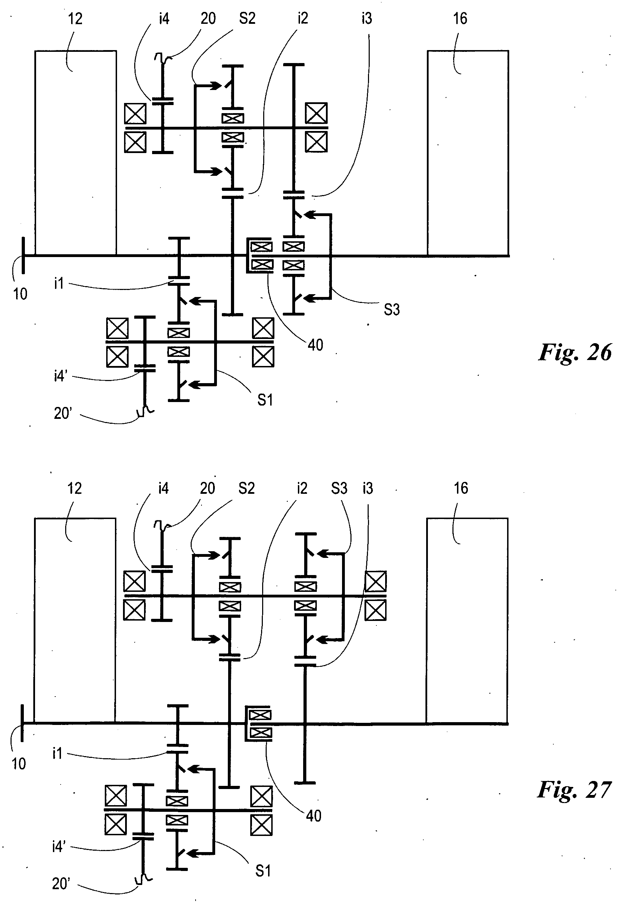

Die Figuren 26 und 27 zeigen jeweils Ausführungsformen mit zwei Triebwellen, an die die Abtriebe 20 und 20' über die Übersetzungsstufen i4 und i4' angekoppelt sind. Bei dieser Ausführungsform ist auf der Antriebswelle des Elektromotors ein Losrad vorgesehen, auf der ersten Triebwelle befindet sich ein Los- und ein Festrad und auf der zweiten Triebwelle lediglich ein Losrad. Im Gegensatz dazu sind bei der Ausführungsform von Figur 27 auf den Antriebswellen nur Festräder vorgesehen und auf der ersten Antriebswelle zwei Losräder und ein Losrad auf der zweiten Antriebswelle. Bei beiden Ausführungsformen gemäß Figur 26 und 27 sind als Übersetzungsstufen lediglich Stirnradstufen vorgesehen.

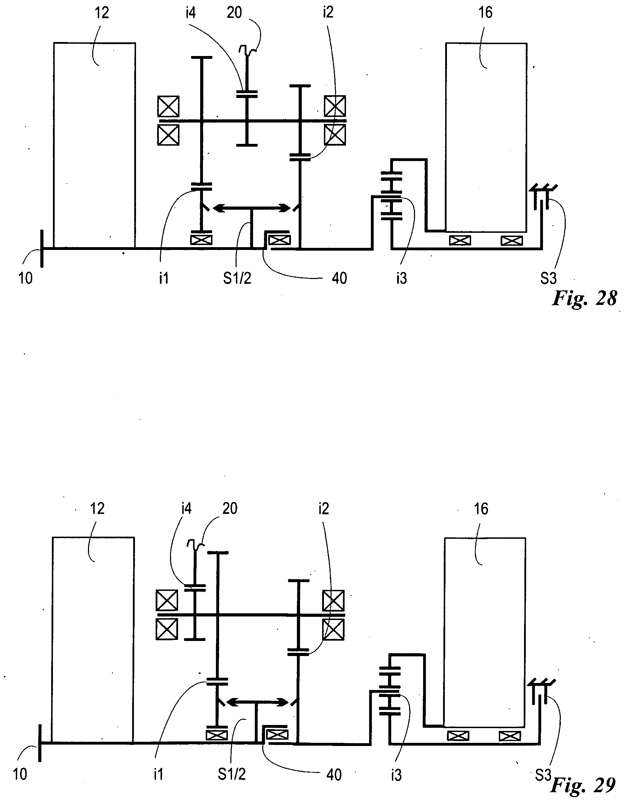

Bei den Ausführungsformen gemäß Figur 28 und 29 Ist die Kopplung des Elektromotors als eine Bremse S3 des Sonnenrades der als Planetengetriebe ausgebildeten Übersetzungsstufe i3 ausgestaltet Der Unterschied zwischen den Ausführungsformen der Figuren 28 und 29 liegt in der Anordnung der Ankopplung des Abtriebs 20 über die Übersetzungsstufe i4.

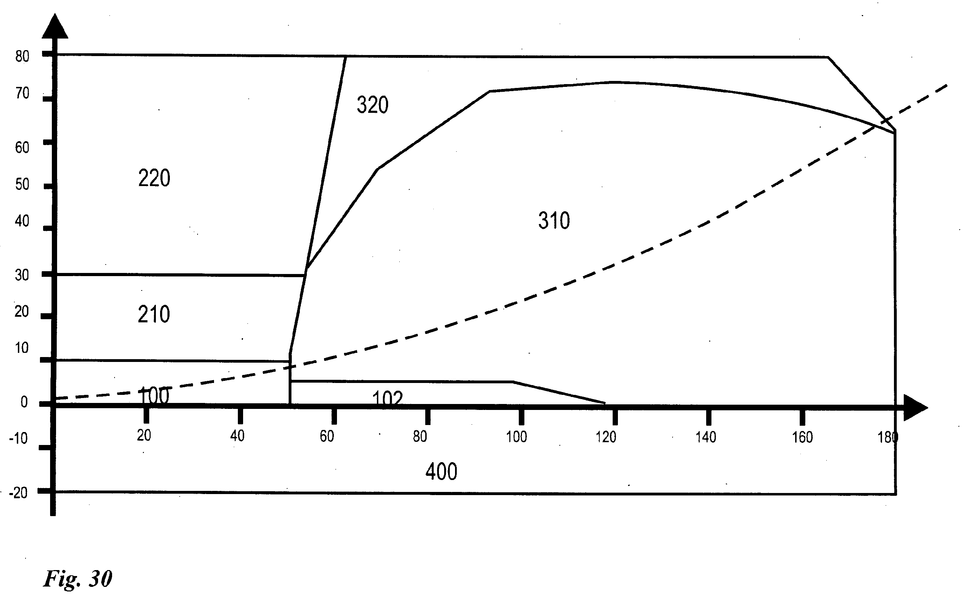

Figur 30 zeigt schematisch die unterschiedlichen Betriebsbereiche, in denen der erfindungsgemäße Hybridantriebsstrang vorzugsweise betrieben wird. Auf der X-Achse ist die Fahrtgeschwindigkeit des Kraftfahrzeugs in Kilometer pro Stunde dargestellt. Auf der Y-Achse ist die jeweilige Radleistung in Kilowatt dargestellt. Die Bereiche 100 und 102 symbolisieren rein elektrisches Fahren, d.h. Fahren mit dem Elektromotor 16 ohne dass die Verbrennungskraftmaschine 10 in Betrieb wäre. Die Bereiche 210 und 220 symbolisieren serielles Fahren, d.h. Fahren mit dem Elektromotor 16, der jedoch aus dem Generator 12 gespeist wird, welcher von der Verbrennungskraftmaschine 10 angetrieben wird. Der Bereich 210 symbolisiert dabei das serielle Fahren mit Leistungsüberschuss, sodass die überschüssig erzeugte elektrische Energie zum Laden des Akkumulators verwendet werden kann. Der Bereich 220 symbolisiert das serielle Fahren mit Boosten, d.h. dass der Generator weniger elektrische Leistung liefert als vom Elektromotor 16 benötigt wird, sodass letzterer die zusätzliche Energie aus dem Akkumulator bezieht.

Die Bereiche 310 und 320 symbolisieren gekoppeltes Fahren, d.h. sowohl die Verbrennungskraftmaschine 16 als auch wenigstens eine der elektrischen Maschinen sind an den Abtrieb 20 angekoppelt. Im Bereich 310 wird zusätzlich zum gekoppelten Fahren geladen. Im Bereich 320 wird das gekoppelte Fahren mit elektrischer Energie aus dem Akkumulator geboostet.

Der Bereich 400 symbolisiert die Rekuperation.

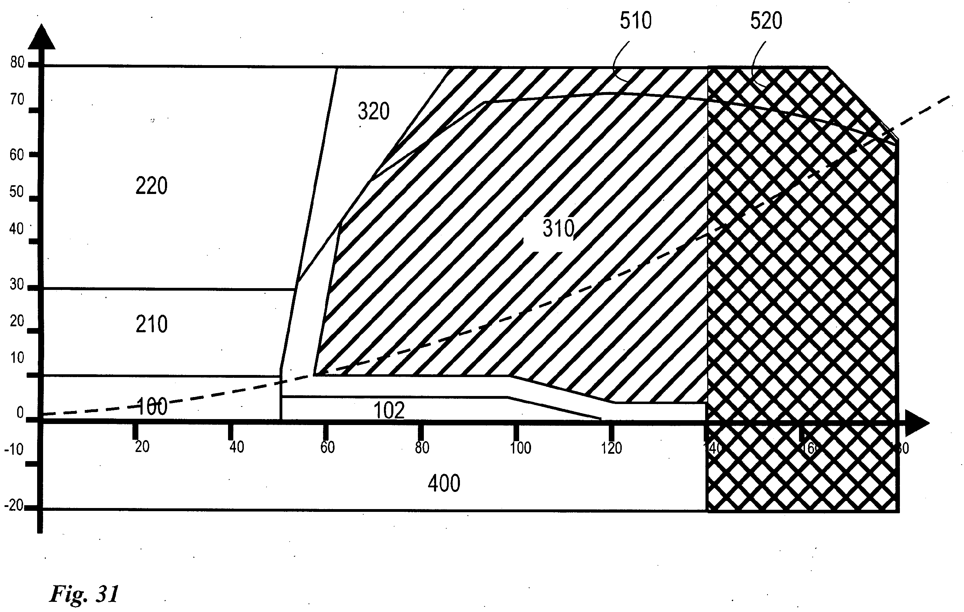

Figur 31 zeigt im Wesentlichen das gleiche Diagramm wie Figur 30, wobei jedoch einige Bereiche schraffiert dargestellt sind. In dem schraffierten Bereich 510 kann es sinnvoll sein, den Elektromotor 16 abzukoppeln. Im Bereich 520 ist dies sogar erforderlich. Der Bereich 520 repräsentiert einen Bereich, in dem die Drehzahl am Abtrieb höher ist, als der Elektromotor 16 über seine Übersetzungsstufe i3 leisten könnte. In diesem Hochgeschwindigkeitsbereich wird der Elektromotor 16 daher abgekoppelt, sodass die hohe Drehzahlfähigkeit der Verbrennungskraftmaschine 10 voll ausgenutzt werden kann. Soweit dieser Bereich sich mit dem Bereich des gekoppelten Fahrens plus Boosten überlappt, erfolgt das Boosten mit Hilfe des Generators 12, der in diesem Fall motorisch betrieben wird.

Im Bereich 510 ist eine Abkopplung des Elektromotors 16 nicht zwingend erforderlich, kann aber sinnvoll sein, um Schleppverluste zu vermeiden. Auch hier dient bei abgekoppeltem Elektromotor der motorisch betriebene Generator als Booster.

Die An- und Abkopplung des Elektromotors 16 erfolgt vorzugsweise automatisiert nach Vorgaben eines Steuergerätes. In dem Steuergerät sind Kriterien hinterlegt, nach denen Fahrsituationen definiert sind, die ein An- bzw. Abkoppeln des Elektromotors notwendig machen.

Zum Abkoppeln sind diese vorzugsweise:
- das Fahren mit angekoppeltem Verbrennungsmotor ist erforderlich,
- ausreichender Geschwindigkeitsabstand zum seriellen Betrieb,
- ausreichender Momenten- bzw. Leistungsabstand zum rein elektrischen Fahrmodus,
- Boost-Funktion des Elektromotors aktuell nicht erforderlich,
- Grenzdrehzahl des Elektromotors erreicht.

Zum Ankoppeln des Elektromotors können folgende Kriterien hinterlegt sein:
- Übergang in den seriellen Betrieb absehbar (Geschwindigkeitsabnahme),
- Übergang In den rein elektrischen Fahrmodus absehbar (Gasrücknahme),
- Boost-Funktion des Elektromotors erforderlich.

Natürlich stellen die in der speziellen Beschreibung diskutieren und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten im Rahmen der beigefügten Ansprüche anhand gegeben. Insbesondere können Merkmale, die in einer oder mehreren Ausführungsformen dargestellt sind, auch mit Merkmalen anderer dargestellter Ausführungsformen kombiniert werden, sodass neue, nicht explizit gezeigte Ausführungsformen im Rahmen der beigefügten Ansprüche entstehen, die für den Fachmann in Kenntnis der vorliegenden Lehre jedoch naheliegend sind.

### Bezugszeichenliste

- 10: Verbrennungskraftmaschine
- 12: Generator
- 14: Trennkupplung
- 16: Elektromotor
- 18: Übersetzungsstufe
- 20,20': Abtrieb
- i1, 2,i3,i4,i4': Übersetzungsstufen
- S1,S2,S3: Koppelelemente
- 40: Entkopplung E-Motor
- 100, 102: elektrischer Fahrbereich
- 210: serieller Fahrbereich mit Laden
- 220: serieller Fahrbereich mit Boosten
- 310: gekoppelter Fahrbereich mit Laden
- 320: gekoppelter Fahrbereich mit Boosten
- 400: Rekuperationsbereich
- 510: vorzugsweiser Abkoppelbereich E-Motor
- 520: notwendiger Abkoppelbereich E-Motor

## Patentansprüche

1. Hybridantriebsstrang für ein Kraftfahrzeug, umfassend
- eine Verbrennungskraftmaschine (10)
- eine erste, vorwiegend generatorisch arbeitende elektrische Maschine (12), deren Rotor mit einer Ausgangswelle der Verbrennungskraftmaschine (10) verbunden ist und deren elektrischer Ausgang mit einem elektrischen Energiespeicher verbunden ist,
- eine zweite, vorwiegend motorisch arbeitende elektrische Maschine (16), deren elektrischer Eingang mit dem elektrischen Energiespeicher verbunden ist,
wobei wenigstens ein Koppelelement (S1, S2, S3) vorgesehen ist, mittels dessen die erste elektrische Maschine (12) und/oder die zweite elektrische Maschine (16) über eine Übersetzungsstufe (i1, i2, i3) mit einem Abtrieb (26) des Kraftfahrzeugs koppelbar ist, und wobei die erste elektrische Maschine (12) wahlweise über ein erstes Koppelelement (S1) und eine erste Übersetzungsstufe (i1) oder über ein zweites Koppelelement (S2) und eine zweite Übersetzungsstufe (i2) mit dem Abtrieb (20) koppelbar ist,
**dadurch gekennzeichnet,**
**dass** die zweite elektrische Maschine (16) über ein eigenes Koppelelement (S3) und eine dritte Übersetzungsstufe (13) wahlweise und unabhängig von der ersten elektrischen Maschine (12) mit dem Abtrieb (20) koppelbar ist.

2. Hybridantriebsstrang nach Anspruch 1,
**dadurch gekennzeichnet,**
**dass** zur Realisierung der Koppelbarkeit der elektrischen Maschinen (12, 16) mit dem Abtrieb (20) wenigstens ein Kupplungselement (S1, S2, S3) als eine schaltbare, formschlüssige Kupplung ausgebildet ist.

3. Hybridantriebsstrang nach einem der vorangehenden Ansprüche,
**dadurch gekennzeichnet,**
**dass** die erste Übersetzungsstufe (i1) einen Berggang darstellt, dessen Übersetzung zwischen i1=10 und i1=12 liegt.

4. Hybridantriebsstrang nach einem der vorangehenden Ansprüche,
**dadurch gekennzeichnet,**
**dass** die zweite Übersetzungsstufe (i2) einen Overdrive darstellt, dessen Übersetzung zwischen i2=2,8 und i2=3,5 liegt.

5. Hybridantriebsstrang nach einem der vorangehenden Ansprüche,
**dadurch gekennzeichnet,**
**dass** die Übersetzung der dritten Übersetzungsstufe (i3) zwischen i3=3,3 und i3=5,3 liegt.

6. Hybridantriebsstrang nach Anspruch 4,
**dadurch gekennzeichnet,**
**dass** die Übersetzung der dritten Übersetzungsstufe (i3) zwischen dem 1,2fachen und dem 1,5fachen der Übersetzung der zweiten Übersetzungsstufe liegt.

7. Verfahren zum Betreiben eines Antriebsstrangs nach Anspruch 3,
**dadurch gekennzeichnet,**
**dass** ausgehend von einem seriellen, elektrischen Fahrbetrieb, in dem nur die zweite elektrische Maschine (16) - über die dritte Übersetzungsstufe (i3) - mit dem Abtrieb (20) gekoppelt ist, automatisch unter Steuerung durch eine Steuervorrichtung zu einem verbrennungsmotorischen Bergfahrbetrieb, in dem die Ausgangswelle der Verbrennungskraftmaschine (10) über die erste Übersetzungsstufe (i1) mit dem Abtrieb (20) gekoppelt ist, umgeschaltet wird, wenn ein aktuell bestimmter Vergleichswert, der einen Quotienten aus einer vom Fahrer aktuell vorgegebenen Radmomentanforderung und einer am Abtrieb (20) aktuell anliegenden Drehbeschleunigung repräsentiert, kleiner ist als ein vorgegebener erster Grenzwert.

8. Verfahren nach Anspruch 7,
**dadurch gekennzeichnet,**
**dass** von dem verbrennungsmotorischen Bergfahrbetrieb in den seriellen, elektrischen Fahrbetrieb umgeschaltet wird, wenn der Vergleichswert größer ist als ein vorgegebener zweiter Grenzwert.

9. Verfahren nach Anspruch 8,
**dadurch gekennzeichnet,**
**dass** der zweite Grenzwert größer ist als der erste Grenzwert.

## Claims

1. Hybrid power train for a motor vehicle, comprising
- an internal combustion engine (10),
- a first electric machine (12) which predominantly operates as a generator and whose rotor is connected to an output shaft of the internal combustion engine (10), and whose electric output is connected to an electric energy store,
- a second electric machine (16) which operates predominantly as a motor and whose electric input is connected to the electric energy store,
wherein at least one coupling element (S1, S2, S3) is provided by means of which the first electric machine (12) and/or the second electric machine (16) can be coupled to an output (26) of the motor vehicle via a transmission stage (i1, i2, i3), and wherein the first electric machine (12) can optionally be coupled to the output (20) via a first coupling element (S1) and a first transmission stage (i1) or via a second coupling element (S2) and a second transmission stage (i2),
**characterized**
**in that** the second electric machine (16) can be coupled to the output (20) optionally via a separate coupling element (S3) and a third transmission stage (13) and independently of the first electric machine (12).

2. Hybrid power train according to Claim 1,
**characterized**
**in that** in order to implement the coupling capability of the electric machines (12, 16) to the output (20) at least one coupling element (S1, S2, S3) is embodied as a shiftable, positively locking clutch.

3. Hybrid power train according to one of the preceding claims,
**characterized**
**in that** the first transmission stage (i1) constitutes a low gear whose transmission ratio is between i1=10 and i1=12.

4. Hybrid power train according to one of the preceding claims,
**characterized**
**in that** the second transmission stage (i2) constitutes an overdrive whose transmission ratio is between i2=2.8 and i2=3.5.

5. Hybrid power train according to one of the preceding claims,
**characterized**
**in that** the transmission ratio of the third transmission stage (i3) is between i3=3.3 and i3=5.3.

6. Hybrid power train according to Claim 4,
**characterized**
**in that** the transmission ratio of the third transmission stage (i3) is between 1.2 times and 1.5 times the transmission ratio of the second transmission stage.

7. Method for operating a power train according to Claim 3,
**characterized**
**in that**, starting from a serial electric drive mode in which only the second electric machine (16) is coupled to the output (20), via the third transmission stage (i3), switching over is carried out automatically and controlled by a control device to a low gear mode powered by internal combustion engine in which the output shaft of the internal combustion engine (10) is coupled to the output (20) via the first transmission stage (i1) if a currently determined comparison value, which represents a quotient of a wheel torque request which is currently predefined by the driver and a rotational acceleration which is currently present at the output (20) is less than a predefined first limiting value.

8. Method according to Claim 7,
**characterized**
**in that** switching over from the low gear mode powered by internal combustion engine into the serial electric drive mode is carried out if the comparison value is greater than a predefined second limiting value.

9. Method according to Claim 8,
**characterized**
**in that** the second limiting value is greater than the first limiting value.

## Revendications

1. Chaîne de transmission hybride pour un véhicule automobile, comprenant:
- un moteur à combustion interne (10),
- une première machine électrique (12) fonctionnant principalement en générateur, dont le rotor est relié à un arbre de sortie du moteur à combustion interne (10) et dont la sortie électrique est reliée à un accumulateur d'énergie électrique,
- une seconde machine électrique (16), fonctionnant principalement en moteur, dont l'entrée électrique est reliée à l'accumulateur d'énergie électrique,
dans laquelle il est prévu au moins un élément de couplage (S1, S2, S3), au moyen duquel la première machine électrique (12) et/ou la seconde machine électrique (16) peut être couplée à une sortie (26) du véhicule automobile par un étage de transmission (il, i2, i3), et dans laquelle la première machine électrique (12) peut être couplée à la sortie (20) au choix par un premier élément de couplage (S1) et un premier étage de transmission (il) ou par un deuxième élément de couplage (S2) et un deuxième étage de transmission (i2),
**caractérisée en ce que** la seconde machine électrique (16) peut être couplée à la sortie (20) par un élément de couplage propre (S3) et un troisième étage de transmission (13) au choix et indépendamment de la première machine électrique (12).

2. Chaîne de transmission hybride selon la revendication 1, **caractérisée en ce qu'**au moins un élément de couplage (S1, S2, S3) est réalisé sous la forme d'un embrayage par emboîtement commutable pour la réalisation de la possibilité de coupler les machines électriques (12, 16) à la sortie (20).

3. Chaîne de transmission hybride selon l'une quelconque des revendications précédentes, **caractérisée en ce que** le premier étage de transmission (il) représente un rapport de montagne, dont le rapport de transmission se situe entre il = 10 et il = 12.

4. Chaîne de transmission hybride selon l'une quelconque des revendications précédentes, **caractérisée en ce que** le deuxième étage de transmission (i2) représente une transmission overdrive, dont le rapport de transmission se situe entre i2 = 2,8 et i2 = 3,5.

5. Chaîne de transmission hybride selon l'une quelconque des revendications précédentes, **caractérisée en ce que** le rapport de transmission du troisième étage de transmission (i3) se situe entre i3 = 3,3 et i3 = 5,3.

6. Chaîne de transmission hybride selon la revendication 4, **caractérisée en ce que** le rapport de transmission du troisième étage de transmission (i3) se situe entre 1,2 fois et 1,5 fois le rapport de transmission du deuxième étage de transmission.

7. Procédé de fonctionnement d'une chaîne de transmission selon la revendication 3, **caractérisé en ce qu'**à partir d'un fonctionnement de roulage électrique en série, dans lequel seule la seconde machine électrique (16) est couplée à la sortie (20) - par le troisième étage de transmission (i3) - on bascule automatiquement, sous la commande d'un dispositif de commande, à un fonctionnement de roulage en montagne avec moteur à combustion interne, dans lequel l'arbre de sortie du moteur à combustion interne (10) est couplé à la sortie (20) par le premier étage de transmission (il), lorsqu'une valeur de comparaison déterminée instantanément, qui représente un quotient d'une demande de couple de roue prédéterminée instantanément par le conducteur et d'une accélération rotative appliquée instantanément à la sortie (20), est inférieure à une première valeur limite prédéterminée.

8. Procédé selon la revendication 7, **caractérisé en ce que** l'on bascule du fonctionnement de roulage en montagne avec moteur à combustion interne au fonctionnement de roulage électrique en série, lorsque la valeur de comparaison est supérieure à une deuxième valeur limite prédéterminée.

9. Procédé selon la revendication 8, **caractérisé en ce que** la deuxième valeur limite est supérieure à la première valeur limite.
